# EUROPEAN PATENT APPLICATION

(11) **EP 1 868 359 A2**
(43) Date of publication of application: **19.12.2007**
(21) Application number: 07004567.9
(22) Date of filing: 06.03.2007
(51) Int. Cl.: H04M 1/725

(54) **Wallpaper setting apparatus and method for audio channel in digital multimedia broadcasting service**

(30) Priority: 11.04.2006 KR 20060032598
(71) Applicant: Samsung Electronics Co., Ltd., Suwon-si, Gyeonggi-Do (KR)
(72) Inventor: Chung, Dae Suk, Gyeonggi-do (KR); Chang, Sun Hee, Gyeonggi-do (KR)
(74) Representative: Boakes, Jason Carrington

(57) **Abstract**

An apparatus and method for providing video data of a video channel as a wallpaper during reception of broadcast data of an audio channel in a digital multimedia broadcasting (DMB) environment is disclosed. The method includes receiving a DMB signal from a predetermined broadcasting center, and outputting, during service of broadcast data of an audio channel in the received DMB signal, video data of one or more video channels as a wallpaper.

## Description

### BACKGROUND OF THE INVENTION

### 1. Field of the Invention

The present invention relates to a digital broadcasting system, and more particularly to an apparatus and method for switching between audio and/or video channels in a digital multimedia broadcasting (DMB) service.

### 2. Description of the Related Art

Conventional analog broadcasting systems are being replaced by digital broadcasting systems that can provide high quality video, audio, and/or services to users.

With advances in digital broadcasting and mobile communication technologies, digital broadcasting services have progressed and can now be received in motion. Accordingly, a digital multimedia broadcasting (DMB) service using mobile terminals has become popular. In a DMB service, various multimedia signals, including audio and video signals, are digitally modulated and delivered to fixed, portable, and/or in-vehicle receivers.

DMB services are based on digital audio broadcasting (DAB) technologies for digital radios, and further include multimedia broadcasting concepts to additionally deliver moving images and information services such as weather, news and location services. DMB services can provide compact disc (CD) or digital versatile disc (DVD)-like high-quality audio and video broadcast data to users in motion through mobile or in-vehicle receivers, and they are attracting attention as next-generation services.

That is, DMB services enable users in motion to receive various multimedia broadcast data of multiple channels through mobile or in-vehicle terminals having an omnidirectional receiving antenna.

Compared with existing broadcasting services, DMB services are characterized by mobility. DMB systems are divided by signal transmission mechanisms into terrestrial and satellite systems. A comparison of DMB systems with existing broadcasting systems is summarized in Table 1.

With reference to Table 1, when compared to existing broadcasting services, DMB services can be characterized by mobility and small receiver size. Broadcasting services are provided though ground stations in terrestrial DMB systems, and are provided through artificial satellites in satellite DMB systems.

In a satellite DMB system, programs are transmitted from a DMB broadcast center to a satellite, which then retransmits the programs to mobile DMB terminals in a wide coverage area of the satellite. Owing to use of a satellite, satellite DMB services are available in outdoor environments across a large area. Gap fillers or repeaters may be required to receive DMB signals and retransmit the received DMB signals in order to provide services to users in shadow areas such as underground or indoor regions.

**Table 1**

| | Mobility | | Comparison |
|---|---|---|---|
| | Fixed | Mobile | |
| Transmission mechanism | existing public broadcasting | Terrestrial DMB | Ground station |
| | existing satellite broadcasting | Satellite DMB | Artificial satellite |
| Comparison | Middle to large receiver | Very small receiver | |

As shown in Table 1, in a terrestrial DMB system, programs are transmitted through spectrum suitable for terrestrial propagation. Unlike the satellite DMB system, broadcast signals are transmitted through base stations, which are similar to those for mobile terminals, on the ground. A terrestrial DMB service is a multimedia service combining TV, audio, and data broadcasting that is provided through terrestrial waves to users in motion.

The configuration of a system providing such DMB services is described as follows.

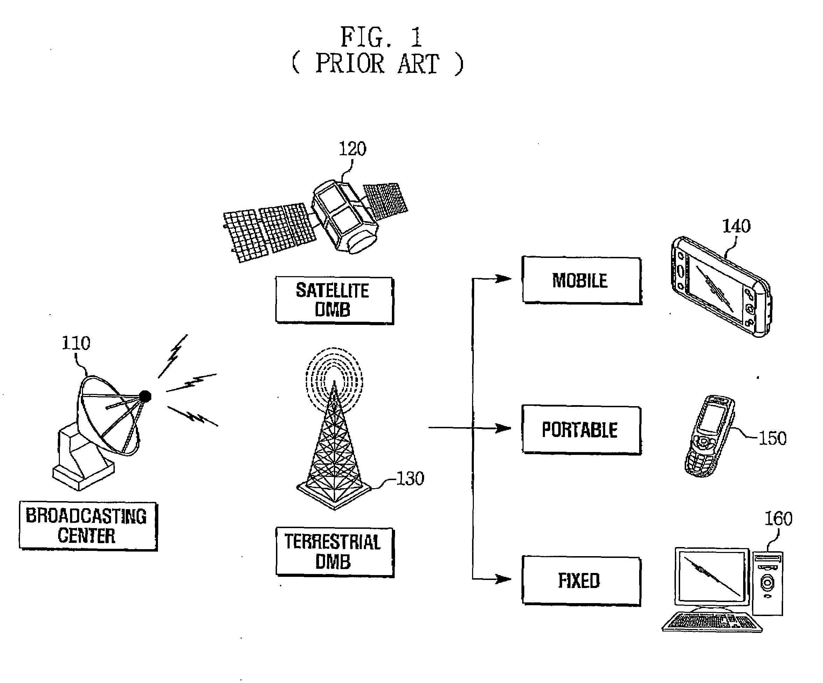

FIG. I shows the configuration of a digital broadcasting system providing general digital broadcasting services. As shown in FIG. 1, the digital broadcasting system comprises a data broadcasting center 110, one or more satellites 120, one or more base stations 130, and a plurality of mobile, portable and fixed receivers such as in-vehicle receivers 140, mobile terminals 150 and/or home receivers 160.

The data broadcasting center 110 compresses and modulates DMB signals representing audio, video and data signals, and transmits the modulated DMB signals to corresponding satellites 120 or base stations 130.

Each satellite 120 or base station 130 receiving the DMB signals from the data broadcasting center 110 amplifies the received DMB signals, and retransmits the amplified DMB signals at different frequencies to the receivers 140, 150 and and/or 160.

Each receiver 140, 150, and/or 160 receives the DMB signals from the corresponding satellite 120 or base station 130, and demodulates and decompresses the received DMB signals to output uncompressed audio, video, and/or data signals.

Rapidly advancing digital broadcasting technologies have enabled users in fast motion to receive noise-free digital broadcast programs, and have demanded development of new added functions and services for greater user satisfaction and convenience.

### SUMMARY OF THE INVENTION

The present invention has been made in view of the above problems, and an object of the present invention is to provide an apparatus and method for switching between audio and/or video channels in a digital multimedia broadcasting service.

Another object of the present invention is to provide an apparatus and method for providing various wallpapers for an audio channel in a digital multimedia broadcasting (DMB) service.

Another object of the present invention is to provide an apparatus and method for providing audio-free video data from a desired video channel as a wallpaper for an audio channel in a digital multimedia broadcasting service.

Another object of the present invention is to provide an apparatus and method wherein, in response to a channel switch from a video channel to an audio channel, video data of a previously active or currently active video channel is provided as a wallpaper for the audio channel in a digital multimedia broadcasting service.

In accordance with an aspect of the present invention, there is provided a method of delivering broadcast data in a DMB environment, including receiving a DMB signal from a predetermined broadcasting center; and outputting, during service of broadcast data of an audio channel in the received DMB signal, video data of one or more video channels as a wallpaper.

In accordance with another aspect of the present invention, there is provided a method of delivering broadcast data in a DMB environment, including determining, upon occurrence of a request of a DMB service by a user, the type of the DMB service; if broadcast data of an audio channel is requested, displaying video data of one or more video channels as a wallpaper according to user settings, and outputting the broadcast data of the requested audio channel; displaying, if video data of a video channel is requested, the video data of the requested video channel; and when a channel switch is requested during display of the video data, displaying video data of a previous or new video channel as a wallpaper according to the user settings, and outputting broadcast data of a newly requested audio channel.

In accordance with yet another aspect of the present invention, there is provided an apparatus for delivering broadcast data in a DMB environment, which includes a controller for setting an operation mode in response to input of a switch signal through a predetermined input means for a DMB service, and for controlling display of user data or data on added function created or maintained according to the switch signal or a setting signal; a display unit for displaying execution windows of applications handling the DMB service, and video data of a video channel and channel information of an audio channel in a display form given by user settings on a screen; and a multimedia module for identifying the type of the DMB service requested by a user, delivering broadcast services corresponding to the identified DMB service type, and separately or simultaneously outputting broadcast data or applications related with the broadcast services through a predetermined output means.

In accordance with a further aspect of the present invention, there is provided an apparatus for delivering broadcast data in a digital multimedia broadcasting (DMB) environment, including a radio frequency (RF) processor for receiving through an appropriate antenna multiplexed broadcast signals transmitted by a predetermined broadcasting center, and RF-processing the received broadcast signals; a DMB receiver for detecting one of the broadcast signals processed by the RF processor corresponding to a requested broadcast channel; a channel switching controller for demultiplexing the broadcast signal detected by the DMB receiver into broadcast data signals of individual broadcast channels, and for assigning audio and video channels upon sensing a channel switch signal; and a decoder for decoding the demultiplexed broadcast data signals using decoding schemes corresponding to coding schemes used by the broadcasting center.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating a digital broadcasting system providing general digital broadcasting services;
FIG. 2 is a block diagram illustrating a mobile terminal according to the present invention;
FIG. 3 is a block diagram illustrating a DMB receiving device according to the present invention;
FIGS. 4A to 4C are screen-shots illustrating a video/audio channel switching method according to the present invention; and
FIG. 5 is a flow chart illustrating a routine to output a broadcast video as a wallpaper of an audio channel.

### DETAILED DESCRIPTION OF THE PREFERRED EMBODIMENTS

Hereinafter, preferred embodiments of the present invention are described in detail with reference to the accompanying drawings. Some constructions or processes known in the art are not described to avoid obscuring the invention in unnecessary detail. Particular terms may be defined to describe the invention in the best manner. Accordingly, the meaning of specific terms or words used in the specification and the claims should not be limited to the literal or commonly employed sense, but should be construed in accordance with the spirit of the invention. The description of the various embodiments is to be construed as exemplary only and does not describe every possible instance of the invention. Therefore, it should be understood that various changes may be made and equivalents may be substituted for elements of the invention.

The present invention relates to a digital broadcasting system. The present invention provides an apparatus and method for delivering added services for user convenience during reception of an audio channel program or after a switch from video to audio channels in a digital multimedia broadcasting (DMB) service.

Specifically, according to an aspect of the present invention, during reception of an audio channel program or after a switch from video to audio channels in a DMB service, video data of one or more previous, current, or other video channels (excluding audio data) is provided as a wallpaper instead of displaying a preset wallpaper of, for example, a blank background image, thereby simultaneously providing broadcast data of an audio channel and video data of at least one video channel. According to a user selection, video data of a video channel, as a wallpaper, can be displayed in a full window, one or more multiple split windows, or as otherwise desired (e.g., a single window that occupies a space which is substantially smaller than the full window (such as a partial window) and video data of multiple video channels can be simultaneously displayed in regularly spaced split windows.

In a conventional mobile terminal, only a single program of either an audio channel or a video channel in a DMB service can be received at one time. Further, the background image is displayed on the screen during reception of an audio channel program is typically a blank screen or other screen (e.g., a preset screen-saver image that is typically unrelated to DMB data.

That is, in a conventional mobile terminal, only a still image or a blank background image can be set as a wallpaper during reception of an audio channel program, thereby underutilizing the screen of a display unit, such as a liquid crystal display (LCD), etc.

Accordingly, during reception of an audio channel program or after a switch from video to audio channels in a DMB service, while video data of one or more previous or current video channels is being reproduced as a wallpaper, broadcast data of a selected audio channel is simultaneously reproduced. Preferably, a predetermined event such as a particular sound and message is used to inform the user that an audio program of a selected audio channel is being received while video data of at least one video channel is being displayed as a wallpaper.

For example, while video data of a previous video channel is being displayed in a full window, a partial window, and/or or split windows, broadcast information of the current audio channel such as a channel index, song title, singer name and next program information can be displayed to inform that the main channel is an audio channel. The channel information may be displayed in the form of an overlay with the video data set as a wallpaper on the screen, displayed by being alpha-blended with the video data, and/or displayed in a separate window placed at the periphery of the video data.

Accordingly, the present invention, provides an apparatus and method that can display video data of a previous or current video channel as a wallpaper during reception of broadcast data of a desired audio channel in a DMB service. Hereinafter, the present invention will be described with reference to the accompanying drawings.

Although, for purposes of the following description, a mobile communication terminal is described as an example of a mobile terminal of the present invention, the mobile terminal is not limited only to mobile communication terminals. For example, the mobile terminal type terminal can provide DMB services with a display screen. Accordingly, the mobile terminal according to the present invention may be any one of information and communication appliances and multimedia appliances that can receive a DMB service, such as a mobile communication terminal, mobile phone, DMB receiver, wired phone, wireless phone, personal digital assistant (PDA), smart phone, notebook, and personal computer, The mobile terminal may also be applied to applications using such appliances.

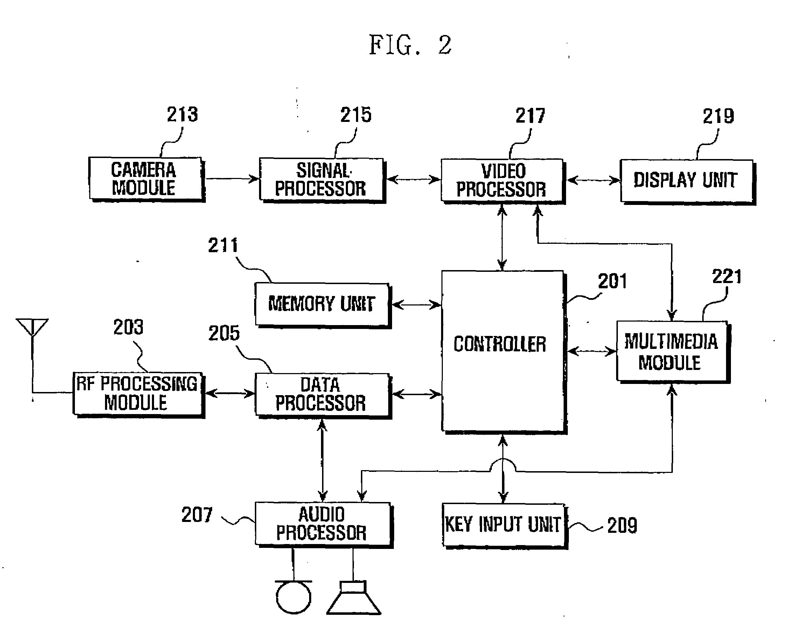

FIG. 2 is a block diagram illustrating the mobile terminal according to the present invention.

Referring to FIG. 2, the mobile terminal for providing a DMB service basically includes an input means, a processing means, a storage means, an output means, and a communication means.

The input means includes an audio processor 207 for processing voice data from a microphone, a key input unit 209 for input of numerals and characters by the user, and an optional camera module 213 for inputting image data of photographed objects. The input means may also include a display unit 219 if an LCD of the display unit 219 includes a touch pad (i.e., touch screen input). The input means provides input multimedia data including audio, numeral, character, and/or image data through the corresponding components.

The processing means can include a signal processor 215 for converting image data from the camera module 213 into a digital signal, a video processor 217 for processing the image signal digitized by the signal processor 215 and for processing DMB-related video data from a multimedia module 221, a data processor 205 for processing voice data from the audio processor 207 and for processing numeric and/or character data inputted by the user through the key input unit 209 or other input devices (e.g., the display unit, etc.), a controller 201 for controlling internal components of the mobile terminal, and the multimedia module 221 for receiving a DMB signal, extracting at least one of video, audio and data signals (or combinations thereof) from the received DMB signal, and decoding each extracted signal, and for delivering requested DMB-related data corresponding to input of a user request for an added function through the input means. The processing means processes user data of voices, characters and images inputted through the input means, and performs operations necessary to handle each added function requested by the user.

The storage means stores user data input through the input means, DMB-related data transmitted from the multimedia module 221, and applications to realize added functions, such as DMB audio/video services, of the mobile terminal. The storage means includes a memory unit 211. The memory unit can include a RAM, ROM, flash memory, hard disc, remote memory (e.g., a networked memory), etc. as desired.

The output means includes the display unit 219 for displaying screens including user input data and requested data related with added functions, and the audio processor 207 for externally outputting audio data. The output means outputs user data input through the input means, DMB-related data stored in the storage means, and one or more screens associated with each added function.

The communication means performs wireless transmission of user data to another device, and can connect to an external Web server to transmit and/or receive data. The communication means includes a radio frequency (RF) processing module 203 and one or more antennas.

More specifically the RF processing module 203 performs communication operations related with phone calls, short message services (SMS) and other data communications. The RF processing module 203 can include an RF transmitter for upconverting the frequency of a signal to be transmitted and/or amplifying the signal, and an RF receiver for (low-noise) amplifying a received signal and/or downconverting the frequency of the signal. The data processor 205 includes a means for encoding and/or modulating a signal to be transmitted through the RF processing module 203, and a means for demodulating and/or decoding a signal received through the RF processing module 203.

The audio processor 207 reproduces an audio signal from the data processor 205 or multimedia module 221, and transmits an audio signal such as a voice signal input from the microphone to the data processor 205. The key input unit 209 can include one or more numeric and/or character keys for the input of numeric and/or character information, and optional control keys for setting various functions. The audio processor can include one or more CODER/DECODERs (CODECs, not shown).

The memory unit 211 may include a program memory and a data memory. The program memory stores control programs for controlling the overall operation of the mobile terminal, and application programs for providing DMB services. The data memory stores data resulting from execution of the control and application programs, DMB service setting information, and a database for maintaining various data including menu data in the form of records. The database includes mapping information for interrelating user data from the mobile terminal, DMB-service related applications and DMB-service related data.

A DMB service providing program may be loaded on the program memory as a special-purpose application that includes a program module for providing, in response to a user request input for a desired DMB service, broadcast information corresponding to various audio data, video data, channel indexes, and broadcast programs provided by the DMB service, a program module for recognizing the user request input, a program module for analyzing the recognized user request input, a program module for selecting an audio or video channel corresponding to the analysis result, and a program module for changing and maintaining the broadcast information and service setting information. The above stated program modules may be either separate modules or may be combined with one or more other program modules.

The controller 201 controls the overall operation of the mobile terminal. The controller 201 also controls a mode setting operation in response to an input of a mode change command through the key input unit 209 for a DMB service. For example, the controller 201 controls the mode setting operation to switch the operation mode from a phone mode for a mobile communication service to a multimedia mode for a DMB service. The controller 201 further controls display of added function-related data or user data created or maintained in response to a mode change command or mode setting operation.

The optional camera module 213 can capture an image of a desired object and output a data signal corresponding to the captured image, and may convert the data signal into digital data in cooperation with an encoder (not shown). The signal processor 215 converts the digital data from the camera module 213 into a digital image signal.

The video processor 217 generates screen data to display the digital image signal from the signal processor 215, Under the control of the controller 201, the video processor 217 can output a video signal of a DMB service from the multimedia module 221 to the display unit 219 in a format consistent with specifications of the display unit 219. The video processor 217 may also compress and decompress video data.

The display unit 219 displays video data from the video processor 217 on the screen. The display unit 219 also displays execution windows of applications in a DMB service, and video data of a video channel and/or audio channel information in a window configuration set by the user.

The multimedia module 221 identifies the type of a DMB service requested by the user and delivers a video, audio and/or text broadcast service according to the identified type. The multimedia module 221 may also individually or simultaneously deliver user or application data related to the selected broadcast service through the video processor 217 and/or audio processor 207.

Hereinafter, the multimedia module 221 for delivering a DMB service will be described in detail.

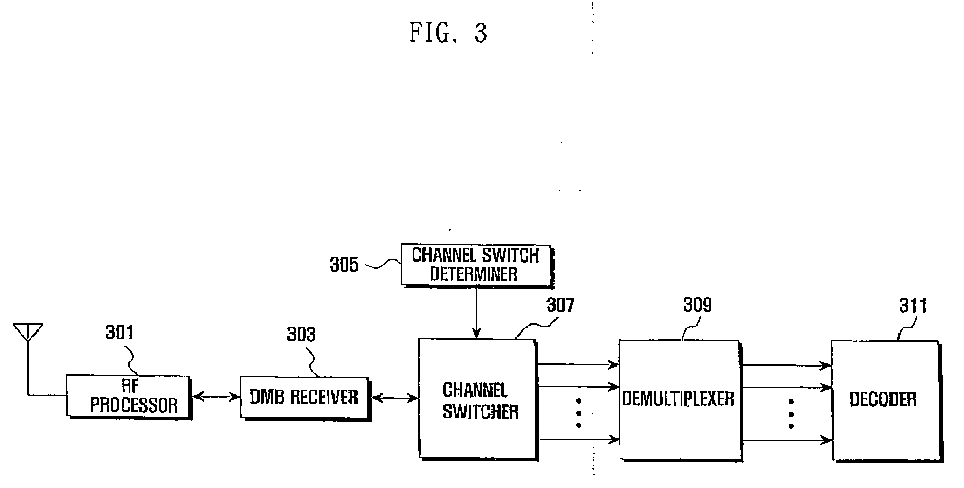

FIG. 3 is a block diagram illustrating a DMB receiving device according to the present invention.

The multimedia module 221 can include a DMB receiver 303 for receiving and processing data of a DMB service. Although, the multimedia module 221 shown in FIG. 2 is configured to be incorporated in the mobile terminal, it may also be implemented as a separate entity independent of the mobile terminal (e.g., a separate module). In such a case the multimedia module may include an adequate interface (e.g., USB, RS232 interface, etc.) for cooperating with the mobile terminal, and corresponding input, processing and output sections.

As shown in FIG. 3, the multimedia module 221 preferably includes a radio frequency (RF) processor 301, the DMB receiver 303, a channel switch determiner 305, a channel switcher 307, a demultiplexer 309, and a decoder 311.

The RF processor 301 receives through a one or more antennas a broadcast signal (a multiplexed broadcast signal) transmitted by a satellite or terrestrial DMB broadcasting center, and RF-processes (converts) the received broadcast signal into a corresponding baseband broadcast signal. A broadcast signal can include one or more of video, text, audio and data signals corresponding to broadcast channels available from the DMB broadcasting center.

The DMB receiver 303 detects the baseband broadcast signal from the RF processor 301 corresponding to a broadcast channel requested by the user. The demultiplexer 309 demultiplexes the broadcast signal detected by the DMB receiver 303 into video, text and audio signals of corresponding broadcast channels, and transmits the demultiplexed audio and video signals of audio and video channels to audio and video tasks for further processing.

The decoder 311 decodes the demultiplexed video, text and audio broadcast signals using decoding schemes corresponding to coding schemes used by the DMB broadcasting center, and outputs the decoded broadcast signals. According to the present invention, when video data of a particular video channel is displayed as a wallpaper while broadcast data of a particular audio channel is being output, the decoder 311 can process the video data of the particular video channel in the same manner as in the case of ordinary video channel data, preferably except for audio/video synchronization. In other words, the output video data may not be synchronized to the output audio data.

The channel switch determiner 305 can detect an input of a user request for an audio channel or video channel, or an input of a user request for a video-to-audio channel switch during service of a video channel, through a predetermined input means, and sends the detected user input request to the channel switcher 307. That is, the channel switch determiner 305 informs the channel switcher 307 of a channel switch request.

Upon reception of a user request from the channel switch determiner 305, for example a channel switch from a video channel to an audio channel or a reception request for audio broadcast data of an audio channel, the channel switcher 307 assigns the requested audio channel and one of previous or new video channels selected to provide video data of a wallpaper for the requested audio channel, and controls the demultiplexer 309 to remove the audio part from the selected video channel.

The demultiplexer 309 demultiplexes the broadcast signal from the DMB receiver 303 to extract, preferably, video and broadcast data, respectively, of the assigned video and audio channels, and transmits the broadcast data of the audio channel to an audio task and also transmits the audio-free video data of the video channel to a video task. The multimedia module 221 may further include one or more optional buffers (not shown) or tasks for buffering the demultiplexed broadcast signals.

The channel switch determiner 305 and channel switcher 307 may be optionally merged with the channel switcher 307 so that they are configured as a single entity. Further, the channel switch determiner 305 and channel switcher 307 may be optionally merged with the demultiplexer 309 to simplify the configuration of the multimedia module 221. Consequently, the present invention is not limited by the configuration shown in FIG. 3,

The channel switcher 307 may also provide content data set in advance by the user to the demultiplexer 309, such as an image, moving image or text file for wallpaper, in addition to the video data of a previous video channel or new video channel.

The multimedia module 221 may further include one or more external interfaces (not shown) through which a received broadcast signal from the DMB broadcasting center is supplied to an external device such as a television set, monitor, and/or other display device, as desired. Accordingly, both the mobile terminal according to the present invention and the external device may have corresponding interfaces and/or communication schemes to enable communications.

As described above, if the multimedia module 221 is implemented as a separate entity independent of the mobile terminal, it may further include an audio/video processor for processing the decoded broadcast signals for output, and an output unit for outputting the processed broadcast signals, such as video and/or audio signals through a display section and/or a speaker.

Hereinafter, a description is given of the operation of a video/audio channel switching method using the DMB receiving device having the above-described configuration according to the present invention.

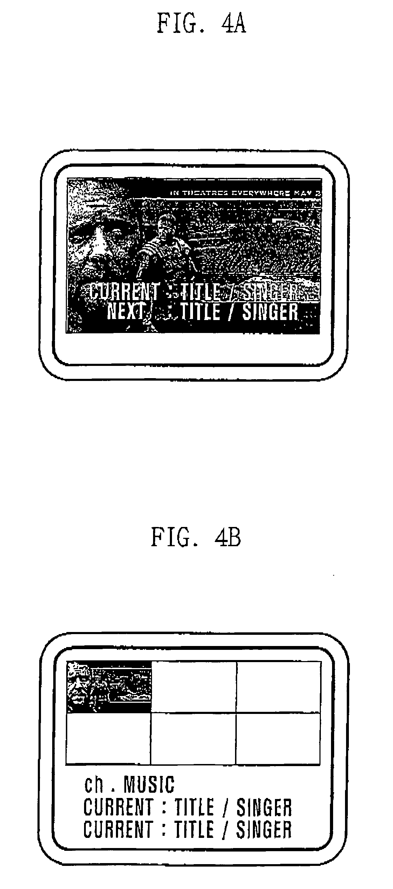

FIGS. 4A to 4C are s are screen-shots illustrating a video/audio channel switching method according to the present invention.

As shown in FIGS. 4A and 4B, when the user requests a broadcast service of an audio channel or a switch from a video channel to an audio channel, the audio broadcast of the requested channel can be delivered (to the user) while video data of one or more of the previous video channels or new video channels (in other words, other video channels) can be displayed as a wallpaper.

The video data as a wallpaper can be displayed in a full window as in FIG. 4A, or displayed using split windows as is shown in FIG. 4B, preferably according to user settings.

In FIG. 4A, video data of a video channel as a wallpaper is displayed in a full window while an audio broadcast of a selected audio channel is being delivered.

During display of the video data, to inform that the main channel is an audio channel, information of the current audio channel, such as a channel index, song title, singer name and next audio program, is preferably mixed with the video data and displayed as shown in FIG. 4A. The audio channel information may be displayed on the screen in the form of an overlay with the video data of a wallpaper, displayed by being alpha-blended with the video data, or displayed in a separate window placed at near a periphery of the video data.

In FIG. 4B, video data of one or more video channels is displayed in multiple split windows of the screen while an audio broadcast of a selected audio channel is being delivered.

The video data can be displayed in various forms according to the user settings. For example, different broadcast videos of multiple video channels may be simultaneously displayed in corresponding split windows. A broadcast video of a video channel may be displayed in a selected one of the split windows. Different broadcast videos of multiple video channels may be displayed in random or sequential order in a particular one of the split windows. Different broadcast videos of one or more video channels may be displayed in random or sequential order in the split windows.

Preferably, when a particular split window is used to display one broadcast video or multiple broadcast videos in random or sequential order, only the particular split window is activated and still or blank images are displayed in the remaining split windows. During display of the video data, to inform that the main channel is an audio channel, information of the current audio channel, such as a channel index, song title, singer name and next audio program, is preferably mixed with the video data and displayed as shown in FIG. 4B. The audio channel information may be displayed on the screen in the form of an overlay with the video data of a wallpaper, displayed by being alpha-blended with the video data, or displayed in a separate window placed at the periphery of the video data.

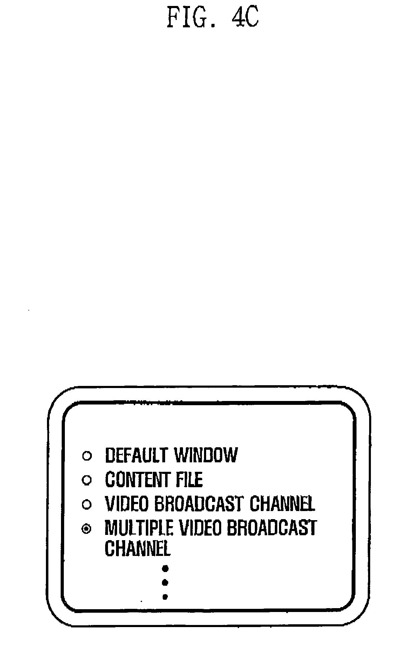

As described above, video data of one or more video channels can be provided as a wallpaper in various forms as shown in FIGS. 4A and 4B according to user settings. A desired display form is preferably set by the user through a wallpaper setting window as shown in FIG. 4C.

Referring to FIG. 4C, the user enters into a wallpaper setting mode to set a desired form of wallpaper display shown in FIG. 4A or 4B. For example, a "video broadcast channel" item of the wallpaper setting window in FIG 4C can be selected to set the form of a wallpaper shown in FIG. 4A. A "multiple video broadcast channel" item may be selected to set the form of a wallpaper shown in FIG. 4B.

The user may also set as a wallpaper a pre-stored content or broadcast data in addition to video data of a particular video channel in a DMB service.

As described above, according to the present invention, upon a switch from video to audio channels or during reception of an audio channel program, video data of one or more of previous or new video channels or a user-set content, instead of a typical channel switch image such as a blank image, is displayed, thereby enabling continuous view of a video or user content.

Upon switching from video to audio channels or during reception of an audio channel program, a still or blank image may be set as a wallpaper for the audio channel. Additionally, according to the present invention, video data of one or more of previous or new video channels may be provided as a wallpaper so that the user can listen to a desired audio broadcast and viewing the video data at the same time. An audio part of the video data is preferably removed from the video data so that video details can be provided to the display as a wallpaper.

To this end, upon a channel switch from a video channel to an audio channel or during reception of audio broadcast data of an audio channel, both the audio channel and one or more of previous or new video channels that are selected to provide video data for a wallpaper are assigned. A received broadcast signal is demultiplexed to extract audio and video data of the assigned audio and video channels. The demultiplexed broadcast data corresponding to the audio channel is transmitted to an audio task for further processing, and the demultiplexed video data corresponding to the one or more video channels is transmitted to a video task.

According to the present invention, a broadcast video of one video channel may be displayed as a wallpaper in a window. Different broadcast videos of multiple video channels may also be displayed as a wallpaper. In addition, the video data of one or more video channels may be displayed as a wallpaper in a full window or in multiple split windows. A broadcast video to be displayed as a wallpaper can be switched to another through a switch of video channels caused by, preferably, a user setting or user key input event.

Hereinafter, a description is given of a video/audio channel switching method to output a broadcast video as a wallpaper according to the present invention.

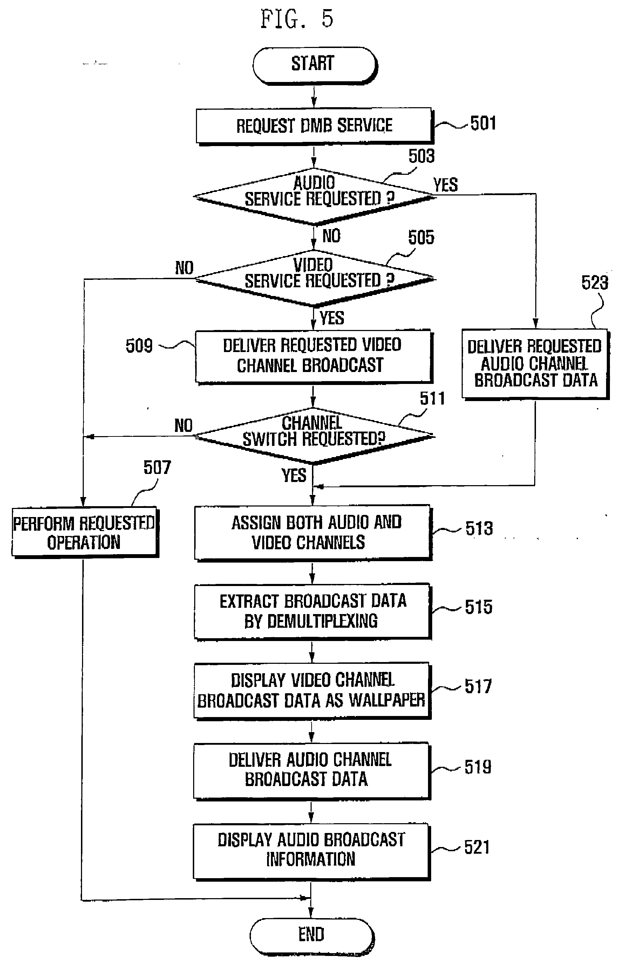

FIG. 5 is a flow chart illustrating a routine to output a broadcast video as a wallpaper of an audio channel.

Referring to FIG. 5, when a DMB service request is input by the user, step 501, whether an audio broadcast service of an audio channel is requested is determined, step 503. If an audio broadcast service is requested, the requested audio channel service, in the DMB service from a predetermined DMB broadcasting center according to an available service type, is delivered step 523, and the method proceeds to step 513, The service type may denote, for example, a terrestrial DMB service or a satellite DMB service.

If it is determined that an audio broadcast service is not requested at step 503, the method proceeds to step 505 at which it is determined whether a video broadcast service of a video channel is requested.

In step 505, if it is determined that a video broadcast service is requested, a video broadcast service of the requested video channel, from a predetermined DMB broadcasting center according to an available service type, is delivered, step 509. The service type may denote, for example, a terrestrial DMB service or a satellite DMB service.

During the reception of the video broadcast service, step 511 is performed to determine whether a channel switch request is input from the user. If it is determined that a channel switch request is input at step 511 the method proceeds to step 513.

In step 513, both the requested audio channel and one or more of previous or new video channels are assigned. In step 515, a received broadcast signal from the DMB broadcasting center is demultiplexed to extract broadcast data of the assigned audio and video channels.

In step 517, the audio part is removed from the video channels and corresponding audio-free video data is displayed as a wallpaper in a preset display mode. In step 519, while the video data is being displayed as a wallpaper, the broadcast data of the requested audio channel is delivered. In step 521, broadcast information of the current audio channel is optionally displayed on (or with) the video data of the video channels according to a preset display form.

For example, the broadcast information of the current audio channel, such as a channel index, song title, singer name, and/or next audio program, may be displayed on the video data or in a split window. The audio channel information is preferably displayed on the video data in the form of an overlay, displayed by being alpha-bleaded with the video data, or displayed in a sliding or pop-up mode, according to user settings.

In step 505, if it is determined that a service other than the video broadcast service is requested, an operation necessary for the requested service is performed in step 507. For example, if a normal mobile communication service other than a DMB service is requested (e.g., a cellular telephone service, etc.,), the corresponding operation is performed. If termination of a DMB service is requested, the corresponding DMB service is terminated.

In step 511 if it is determined that a user request other than a channel switch is input, the video broadcast service is continued and an operation necessary for the inputted request is performed in step 507. If termination of a DMB service is requested, the corresponding DMB service is terminated.

As apparent from the above description, the present invention provides an apparatus and method for switching between video/audio channels in a digital multimedia broadcasting (DMB) service. In a DMB service, upon a switch from video to audio channels or during reception of an audio channel program, the audio channel program is delivered while video data of one or more of previous or new video channels is being provided as a wallpaper for the audio channel. During reception of an audio channel program, video data of one or more video channels is delivered as a wallpaper according to user settings, thereby attracting a user's interest. In addition, during reception of an audio channel program, various images are provided through the screen of an LCD, thereby heightening utilization of the LCD and user convenience.

While preferred embodiments of the present invention have been shown and described in this specification, it will be understood by those skilled in the art that various changes or modifications of the present invention are possible without departing from the spirit and scope of the invention as defined by the appended claims.

## Claims

1. A method of delivering broadcast data in a digital multimedia broadcasting (DMB) environment, comprising the steps of:
a) receiving a DMB signal from a predetermined broadcasting center; and
b) outputting, during service of broadcast data of an audio channel in the received DMB signal, video data of one or more video channels as a wallpaper.

2. The method of claim 1, wherein in step b) an audio part is removed from broadcast data of one or more of previously or currently active video channels broadcast by the broadcasting center and corresponding audio-free video data is output.

3. The method of claim 1, wherein step b) further comprises outputting pre-stored content data as a wallpaper during service of broadcast data of the audio channel.

4. The method of claim 1, further comprising displaying broadcast information of the audio channel on the video data during output of the video data as a wallpaper.

5. The method of claim 1, wherein in step b) video data of a video channel is output as a wallpaper in at least one of a full window and one or more split windows.

6. The method of claim 1, wherein in step b) video data of at least one video channel is output as a wallpaper in a corresponding split window.

7. A method of delivering broadcast data in a digital multimedia broadcasting (DMB) environment, comprising the steps of:
a) determining, upon occurrence of a request of a DMB service by a user, a type of the DMB service;
b) if broadcast data of an audio channel is requested, displaying video data of one or more video channels as a wallpaper according to user settings, and outputting the broadcast data of the requested audio channel;
c) displaying, if video data of a video channel is requested, the video data of the requested video channel; and
d) when a channel switch is requested during display of the video data, displaying video data of a previous or new video channel as a wallpaper according to the user settings, and outputting broadcast data of a newly requested audio channel.

8. The method of claim 7, wherein at least one of steps b) or d) further include :
assigning both the requested audio channel and one or more video channels;
extracting broadcast data and video data of the assigned audio and video channels by demultiplexing;
removing an audio part from the video channels and displaying the audio-free video data as a wallpaper in a preset display form; and
outputting the demultiplexed broadcast data of the audio channel while displaying the audio-free video data.

9. The method of claim 8, wherein at least one of steps b) or d) further comprises displaying broadcast information of the current audio channel according to the user settings on the video data being displayed.

10. The method of claim 9, wherein the broadcast information of the current audio channel is displayed in the form of an overlay on the video data and is alpha-blended with the video data or is displayed in a sliding manner.

11. The method of claim 7, wherein at least one of steps b) or d) further comprise removing an audio part from broadcast data of one or more of previously or currently active video channels broadcast by a predetermined broadcasting center, and the audio-free video data is output.

12. The method of claim 7, wherein at least one of steps b) or d) further comprise outputting pre-stored content data as a wallpaper during output of broadcast data of the requested audio channel.

13. The method of claim 7, wherein at least one of steps b) or d) further comprise outputting video data of a video channel as a wallpaper in at least one of a full window and one or more split windows.

14. The method of claim 7, wherein at least one of steps b) or d) further comprise outputting video data of one or more video channels as a wallpaper in one or more split windows.

15. An apparatus for delivering broadcast data in a digital multimedia broadcasting (DMB) environment, comprising:
a controller for setting an operation mode in response to input of a switch signal through a predetermined input means for a DMB service, and for controlling a display of at least one of user data and data corresponding to an added function created or maintained according to the switch signal or a setting signal;
a display unit for displaying on a screen execution windows of applications handling the DMB service, video data of a video channel, and channel information of an audio channel in a display form corresponding to predetermined user settings; and
a multimedia module for identifying a type of the DMB service requested by a user, delivering broadcast services corresponding to the identified DMB service type, and separately or simultaneously outputting broadcast data or applications related with the broadcast services through a predetermined output means.

16. The apparatus of claim 15, further comprising a memory unit for storing program modules containing the applications handling the DMB service, data resulting from execution of the program modules, and DMB service setting information.

17. The apparatus of claim 16, wherein the program modules containing the applications include:
a module for providing service information regarding available audios, videos, channel indexes, and broadcast programs in response to a user request input for a desired DMB service,
a module for recognizing the user request input,
a module for analyzing the recognized user request input,
a module for selecting an audio or video channel corresponding to the analysis result, and
a module for changing and maintaining the service information and service setting information.

18. The apparatus of claim 15, wherein the multimedia module includes a DMB receiving means for receiving and processing data of the DMB service, and is incorporated in the apparatus or is implemented as a separate entity independent of the apparatus.

19. The apparatus of claim 15, wherein the multimedia module includes:
a radio frequency (RF) processor for receiving from an antenna multiplexed broadcast signals transmitted by a predetermined broadcasting center, and RF-processing the received broadcast signals;
a DMB receiver for detecting one of the broadcast signals processed by the RF processor corresponding to a requested broadcast channel;
a channel switching controller for demultiplexing the broadcast signal detected by the DMB receiver into broadcast data signals of individual broadcast channels, and for assigning audio and video channels upon sensing a channel switch signal; and
a decoder for decoding the demultiplexed broadcast data signals using decoding schemes corresponding to coding schemes used by the broadcasting center.

20. The apparatus of claim 19, wherein multiplexed broadcast signals each include one or more of video, text, audio and data signals corresponding to broadcast channels available from the broadcasting center.

21. The apparatus of claim 19, wherein the channel switching controller includes:
a demultiplexer for demultiplexing the broadcast signal detected by the DMB receiver into broadcast data signals of individual broadcast channels;
a channel switch determiner for sensing input of a user request for an audio channel or input of a user request for a channel switch from a video channel to an audio channel during video channel service reception, through a predetermined input means, and outputting a control signal in response to the sensed input of a user request; and
a channel switcher for assigning, upon reception of the control signal from the channel switch determiner, the requested audio channel and the video channel, and for removing an audio part from video data of the video channel to output audio-free video data as a wallpaper.

22. The apparatus of claim 19, wherein the channel switching controller demultiplexes the broadcast signal detected by the DMB receiver into broadcast data and video data of the assigned audio and video channels, and transmits the video data of the video channel to a predetermined buffer.

23. The apparatus of claim 19, wherein the channel switching controller assigns not only the requested audio channel but also one or more of previously or currently active video channels or a content preset according to the user settings for providing wallpaper data.

24. The apparatus of claim 15, wherein the multimedia module further includes:
an external interface to enable transmission of a broadcast signal from the DMB broadcasting center to an external device;
an audio/video processor for processing decoded broadcast signals into video and audio data for output; and
an output section for outputting the processed video and audio data.

25. The apparatus of claim 15, wherein the multimedia module supplies, during service of video data of a video channel and broadcast data of an audio channel, broadcast information of the audio channel, for display on the video data as a wallpaper of the display unit.

26. The apparatus of claim 15, wherein the multimedia module supplies, during service of video data and audio data, video data of one or more video channels as a wallpaper in at least one of a full window and one or more split windows.

27. An apparatus for delivering broadcast data in a digital multimedia broadcasting (DMB) environment, comprising;
a radio frequency (RF) processor for receiving through an appropriate antenna multiplexed broadcast signals transmitted by a predetermined broadcasting center and RF-processing the received broadcast signals;
a DMB receiver for detecting one of the broadcast signals processed by the RF processor corresponding to a requested broadcast channel;
a channel switching controller for demultiplexing the broadcast signal detected by the DMB receiver into broadcast data signals of individual broadcast channels and for assigning audio and video channels upon sensing a channel switch signal; and
a decoder for decoding the demultiplexed broadcast data signals using decoding schemes corresponding to coding schemes used by the broadcasting center.

28. The apparatus of claim 27, wherein the channel switching controller includes:
a demultiplexer for demultiplexing the broadcast signal detected by the DMB receiver into broadcast data signals of individual broadcast channels;
a channel switch determiner for sensing input of a user request for an audio channel or input of a user request for a channel switch from a video channel to an audio channel in video channel service reception, through a predetermined input means, and outputting a control signal in response to the sensed input of a user request; and
a channel switcher for assigning, upon reception of the control signal from the channel switch determiner, the requested audio channel and the video channel, and for removing an audio part from the video channel to output audio-free video data as a wallpaper.

29. The apparatus of claim 28, wherein the demultiplexer demultiplexes the broadcast signal detected by the DMB receiver into broadcast data and video data of the assigned audio and video channels, and transmits the video data of the video channel to a predetermined buffer.

30. The apparatus of claim 28, wherein the channel switcher assigns the requested audio channel and one or more of previously or currently active video channels or a content preset according to the user settings for providing wallpaper data.

31. The apparatus of claim 27, wherein the channel switching controller supplies, during service of video data of a video channel and broadcast data of an audio channel, broadcast information of the audio channel for display on the video data as a wallpaper of a display unit.

32. The apparatus of claim 27, wherein the channel switching controller supplies, during service of video data and audio data, video data of one or more video channels as a wallpaper in at least one of a full window and one or more split windows.
